# FASCICULE DE BREVET EUROPEEN

(11) **EP 0 483 021 B1**
(45) Date de publication et mention de la délivrance du brevet: **18.01.1995**
(21) Numéro de dépôt: 91420320.3
(22) Date de dépôt: 12.09.1991
(51) Int. Cl.: H02B 1/048, H02G 3/14

(54) **Obturateur verrouillable pour coffret électrique**
Verriegelbarer Deckel für elektrischen Kasten
Interlocking cover for electrical box

(30) Priorité: 28.09.1990 FR 9012266
(43) Date de publication de la demande: 29.04.1992
(73) Titulaire: MERLIN GERIN, F-38240 Meylan (FR)
(72) Inventeur: Bonnet, Jean-Marc, F-38050 Grenoble Cédex (FR); Buet, Jacques, F-38050 Grenoble Cédex (FR); Grosset-Janin, Emile, F-38050 Grenoble Cédex (FR); Chambron, Robert, F-38050 Grenoble Cédex (FR)
(74) Mandataire: Hecké, Gérard

(56) Documents cités:
- DE-U- 8 808 049
- FR-A- 2 413 809
- US-A- 3 677 434
- US-A- 4 687 164

## Description

L'invention est relative à un obturateur amovible susceptible d'obturer une ouverture rectangulaire, ménagée dans un plastron ou face avant d'un coffret de logement d'appareillage électrique à boîtiers modulaires, ledit obturateur comprenant un corps en matériau plastique muni de moyens de fixation ayant une première branche déformable agencée en pince de positionnement destinée à être engagée à chevauchement sur le bord inférieur de l'ouverture.

Selon le document FR-A-2.413.809, les moyens de fixation comportent une deuxième branche élastique agencée à l'opposé de la pince de positionnement pour assurer un clipsage de l'obturateur sur le bord supérieur de l'ouverture du plastron. L'effet de clipsage est obtenu par une pression exercée sur l'obturateur depuis l'avant, et il est indispensable de fixer par l'arrière une pièce de verrouillage additionnelle pour obtenir une condamnation totale lorsque le plastron est solidarisé à la face avant du coffret.

L'objet de l'invention consiste à réaliser un obturateur monobloc à condamnation intégrée.

L'obturateur selon l'invention est caractérisé en ce que le corps est conformé en profilé obtenu par extrusion, et comporte une plaque rigide, équipée sur sa face postérieure d'une première et d'une deuxième nervures longitudinales d'appui de la plaque contre les bords inférieur et supérieur de l'ouverture, et d'une deuxième branche déplaçable à pivotement entre une position fermée de verrouillage et une position ouverte de déverrouillage, ladite deuxième branche étant munie d'un crochet d'encliquetage coopérant en position fermée avec un rebord de retenue solidaire de la face postérieure de la plaque.

L'encliquetage du crochet sur le rebord s'effectue derrière la plaque d'obturation, de manière à être inaccessible après mise en place du plastron, entraînant une condamnation de la zone non occupée de l'ouverture. L'enlèvement de l'obturateur nécessite un démontage préliminaire du plastron avant d'actionner la deuxième branche vers la position ouverte de déverrouillage.

Le rebord de retenue du crochet est situé entre la deuxième nervure d'appui, et l'embase de fixation de la deuxième branche. Il en résulte que la zone d'encliquetage est éloignée du bord supérieur de l'ouverture. La deuxième branche est plus longue que la première branche, et est reliée à l'embase correspondante par une charnière autorisant un pliage longitudinal dans le sens du mouvement de pivotement.

La réaction de l'extrémité de la deuxième branche sur le plastron en position fermée de verrouillage engendre une force élastique qui tend à renforcer l'action de verrouillage entre le crochet et le rebord.

D'autres avantages ressortiront plus clairement de la description qui va suivre d'un mode de réalisation de l'invention, donné à titre d'exemple non limitatif et représenté aux dessins annexés, dans lesquels:
- la figure 1 est une vue en perspective de l'obturateur selon l'invention;
- la figure 2 est une vue en coupe selon la ligne 2-2 de la figure 1;
- la figure 3 montre l'obturateur en position encliquetée et encastrée dans l'ouverture d'un plastron à fenêtre;
- les figures 4 à 6 représentent différentes étapes de montage de l'obturateur sur un plastron plat à paroi épaisse;
- les figures 7 à 9 sont des vues identiques aux figures 4 à 6 pour un plastron plat à paroi mince.

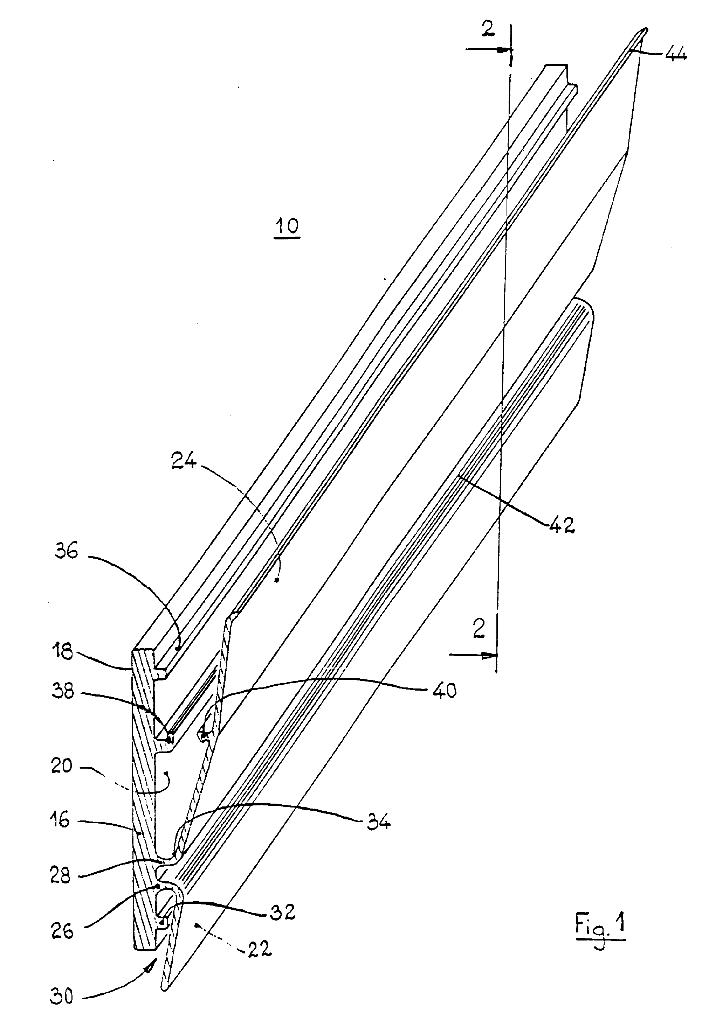

En référence aux figures 1 à 3, un obturateur 10 amovible peut être monté, sur les deux bords supérieur et inférieur d'une ouverture 12 rectangulaire, ménagée dans un plastron 14 ou face avant d'un coffret (non représenté) de logement d'appareillage électrique à boîtiers modulaires. L'ouverture 12 s'étend sur la quasi-totalité de la largeur du coffret, et permet la venue en saillie de la partie avant des boîtiers pour l'accès aux manettes de commande après enlèvement de l'obturateur 10. La mise en place de l'obturateur 10 s'opère exclusivement dans la zone dépourvue d'appareillage, de manière à boucher la partie non occupée de l'ouverture 12.

En cas de condamnation d'une rangée complète, l'obturateur 10 masque la totalité de la largeur de l'ouverture 12.

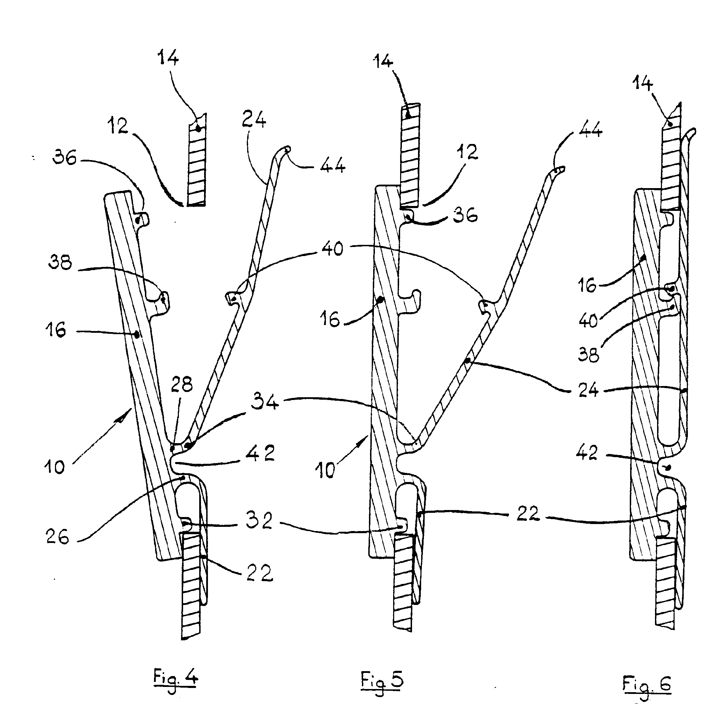

L'obturateur 10 est constitué par un corps profilé en matériau plastique réalisé par extrusion, et comportant une plaque 16 rigide de forme rectangulaire, ayant une face antérieure 18 sensiblement plane, laquelle est visible en position montée dans l'ouverture 12 (figure 3).

La face postérieure 20 de l'obturateur 10 est équipée de deux branches 22,24 de différentes longueurs, s'étendant respectivement à partir de deux embases de fixation 26,28, en étant recourbées en sens opposés l'une de l'autre.

La première branche 22 la plus courte est déformable par élasticité, et est dirigée vers le bas en coopérant avec la partie inférieure rigide de la plaque 16 pour constituer une pince 30 de positionnement en forme de U renversé, susceptible d'être engagée à chevauchement sur le bord inférieur de l'ouverture 12. A l'intérieur de la pince 30 se trouve une première nervure 32 d'appui faisant saillie de la face postérieure 20, en s'étendant le long de la direction longitudinale du profilé.

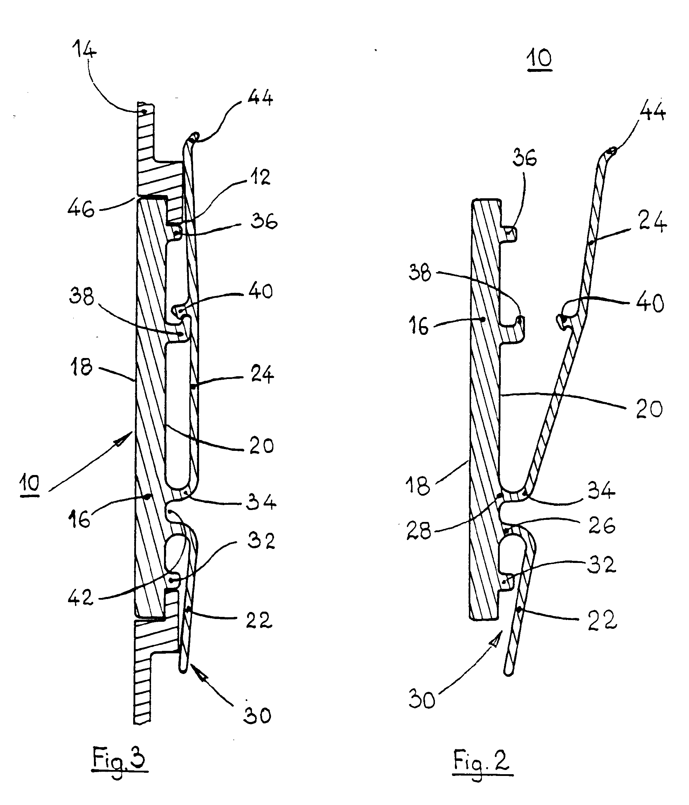

La deuxième branche 24 qui présente une longueur supérieure à celle de la première branche 22, comporte une charnière 34, agencée au voisinage de l'embase 28, pour autoriser un pivotement de la branche 24 mobile entre une position ouverte de déverrouillage (figure 2) et une position fermée de verrouillage (figure 3) de l'obturateur 10. La charnière 34 est constituée par une partie amincie ou réduction d'épaisseur de la deuxième branche 22, permettant un pliage longitudinal dans le sens du mouvement de pivotement.

L'extrémité supérieure de la face postérieure 20 est dotée d'une deuxième nervure 36 d'appui, parallèle à la première nervure 32 opposée. L'écartement entre les faces extérieures des deux nervures 32,36 correspond sensiblement à la distance entre les bords supérieur et inférieur de l'ouverture 12.

Entre la deuxième nervure 36 et l'embase 28 est agencé un rebord 38 de retenue destiné à coopérer avec un crochet 40 d'encliquetage lorsque la branche 24 est actionnée vers la position fermée. Le crochet 40 est situé dans la zone médiane de la deuxième branche 24, et son accrochage sur le rebord 38 est facilité par l'élasticité de la deuxième branche 24, laquelle présente une épaisseur inférieure à celle de la plaque 16.

Les extrémités des deux branches 22,24 élastiques dépassent les chants opposés respectifs de la plaque 16 rigide. La juxtaposition des deux embases 26,28 sur la face postérieure 20 délimite une rainure 42 longitudinale de séparation des deux branches 22,24. L'extrémité 44 de la deuxième branche 24 joue le rôle de levier de préhension, destiné à déplacer la branche 24 mobile vers la position ouverte de déverrouillage.

Le profilé de l'obturateur 10 peut comporter des lignes de prédécoupe (non représentées) échelonnées à intervalles réguliers normalisés le long de la direction longitudinale. Le fractionnement ou sciage de ces lignes permet d'obtenir des obturateurs monoblocs de longueurs prédéterminées, adaptables à la partie non occupée de l'ouverture 12.

L'obturateur 10 peut être totalement encastré dans une fenêtre 46 (figure 3) du plastron 14, ladite fenêtre ayant une dimension légèrement supérieure à celle de l'ouverture 12 adjacente. Le maintien de l'obturateur 10 dans la fenêtre 46 résulte de l'encliquetage du crochet 40 sur le rebord 38 après rapprochement de la deuxième branche 24.

L'installation de l'obturateur 10 dans l'ouverture 12 est illustrée sur les figures 4 à 6, utilisant un plastron 14 plat:

Après ouverture de la deuxième branche 24, la pince 30 de positionnement est montée à chevauchement sur le bord inférieur de l'ouverture 12, avec appui de la première nervure 32 sur une arête du bord (figure 4). Le pivotement de la plaque 16 dans le sens des aiguilles d'une montre assure ensuite la venue en butée de la partie supérieure contre le plastron 14 (figure 5).

La plaque 16 se trouve alors en saillie du plastron 14, et il suffit d'encliqueter le crochet 40 sur le rebord 38 pour fixer définitivement l'obturateur 10 dans l'ouverture 12 (figure 6).

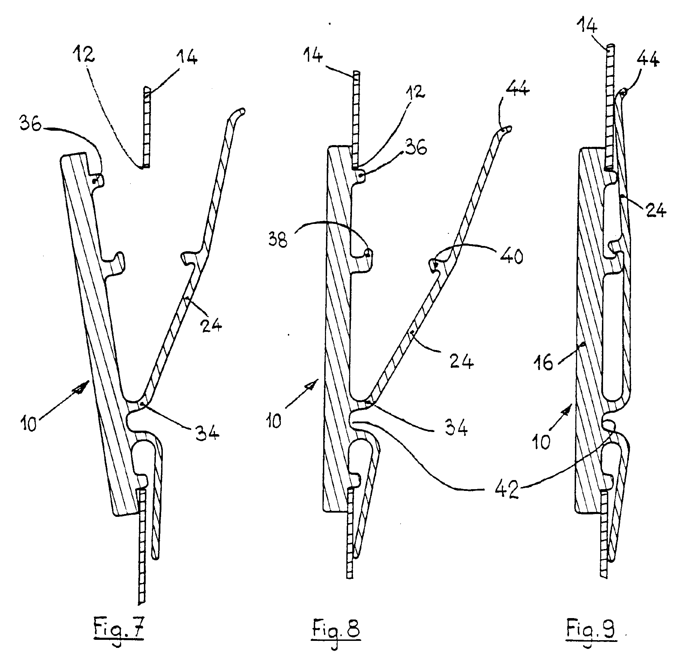

Dans la variante des figures 7 à 9, l'épaisseur du plastron 14 est inférieure à celle du plastron des figures 4 à 6, et on remarque une déformation élastique plus prononcée de la deuxième branche 24 pour assurer l'encliquetage du crochet 40 sur le rebord 38.

L'action mécanique de verrouillage entre le crochet 40 et le rebord 38 n'est pas entravée par la forme et l'épaisseur du plastron 14. La réaction de l'extrémité 44 de la deuxième branche 24 déformable sur la face interne du plastron 14 (figures 3,6 et 9) engendre une force élastique qui tend à renforcer l'action de verrouillage par un maintien élastique permanent du crochet 40 sur le rebord 38, indépendamment de l'angle d'inclinaison de la deuxième branche 24.

En position montée de l'obturateur 10, on remarque que l'encliquetage du crochet 40 sur le rebord 38 s'effectue derrière la plaque 16, de manière à être inaccessible lorsque le plastron 14 est fixé au coffret. Il en résulte une condamnation de la zone non occupée de l'ouverture 12.

L'enlèvement de l'obturateur 10 nécessite le démontage préliminaire du plastron 14 pour accéder à l'extrémité 44 du levier de préhension autorisant le déplacement de la deuxième branche 24 vers la position ouverte de déverrouillage du crochet 40.

## Revendications

1. Obturateur amovible susceptible d'obturer une ouverture (12) rectangulaire, ménagée dans un plastron (14) ou face avant d'un coffret de logement d'appareillage électrique à boîtiers modulaires, ledit obturateur (10) comprenant un corps en matériau plastique muni de moyens de fixation ayant une première branche (22) déformable agencée en pince (30) de positionnement destinée à être engagée à chevauchement sur le bord inférieur de l'ouverture (12), caractérisé en ce que le corps est conformé en profilé obtenu par extrusion, et comporte une plaque (16) rigide, équipée sur sa face postérieure (20) d'une première et d'une deuxième nervures (32,36) longitudinales d'appui de la plaque (16) contre les bords inférieur et supérieur de l'ouverture (12), et d'une deuxième branche (24) déplaçable à pivotement entre une position fermée de verrouillage et une position ouverte de déverrouillage, ladite deuxième branche (24) étant munie d'un crochet (40) d'encliquetage coopérant en position fermée avec un rebord (38) de retenue solidaire de la face postérieure (20) de la plaque (16).

2. Obturateur selon la revendication 1, caractérisé en ce que le rebord (38) de retenue du crochet (40) est situé entre la deuxième nervure (36) d'appui, et l'embase (28) de fixation de la deuxième branche (24).

3. Obturateur selon la revendication 1 ou 2, caractérisé en ce que l'épaisseur des première et deuxième branches (22,24) est inférieure à celle de la plaque (16) rigide, et que la deuxième branche (24) est plus longue que la première branche (22), et est reliée à l'embase (28) correspondante par une charnière (34) autorisant un pliage longitudinal dans le sens du mouvement de pivotement.

4. Obturateur selon la revendication 3, caractérisé en ce que la charnière (34) est formée par une réduction d'épaisseur de la deuxième branche (24).

5. Obturateur selon l'une des revendications 1 à 4, caractérisé en ce que la réaction de l'extrémité (44) de la deuxième branche (24) sur le plastron (14) en position fermée de verrouillage engendre une force élastique qui tend à renforcer l'action de verrouillage entre le crochet (40) et le rebord (38), et que ladite extrémité est agencée en levier de préhension destiné à déplacer la deuxième branche (24) vers la position ouverte de déverrouillage.

6. Obturateur selon l'une des revendications 1 à 5, caractérisé en ce que les deux embases (26,28) de fixation des première et deuxième branches (22,24) délimitent une rainure (42) longitudinale, qui est plus proche de la première nervure (32) que du rebord (38) de retenue.

## Patentansprüche

1. Abnehmbare Blende zum Verschließen einer in einer Abdeckplatte (14) bzw. an der Frontseite eines Elektroinstallationskastens zur Aufnahme von modularen elektrischen Schaltgeräten ausgebildeten rechteckigen Öffnung, wobei die genannte Blende (10) einen Grundkörper aus Kunststoff aufweist, der mit Befestigungsmitteln versehen ist, die einen ersten als Positionierbügel (30) ausgebildeten verformbaren Flügel (22) umfassen, der dazu dient, über den unteren Rand der Öffnung (12) geschoben zu werden, dadurch gekennzeichnet, daß der Grundkörper als extrudiertes Kunststoffprofil ausgeführt ist und eine biegesteife Platte (16) umfaßt, die auf ihrer Rückseite (20) eine erste und eine zweite, in Längsrichtung angeordnete Schulter (32, 36) zur Auflage der Platte (16) auf dem unteren bzw. oberen Rand der Öffnung (12) sowie einen zweiten, zwischen einer geschlossenen Verriegelungsstellung und einer geöffneten Entriegelungsstellung verschwenkbaren Flügel (24) umfaßt, an dem ein Rasthaken (40) ausgebildet ist, der in der geschlossenen Stellung mit einer, fest mit der Rückseite (20) der Platte (16) verbundenen Raststufe (38) zusammenwirkt.

2. Blende nach Anspruch 1, dadurch gekennzeichnet, daß die Raststufe (38) zur Aufnahme des Rasthakens (40) zwischen der zweiten Auflageschulter (36) und dem Verbindungsansatz (28) des zweiten Flügels (24) angeordnet ist.

3. Blende nach Anspruch 1 oder 2, dadurch gekennzeichnet, daß der erste und zweite Flügel (22, 24) eine geringere Dicke aufweisen als die biegesteife Platte (16) und daß der zweite Flügel (24) länger ist als der erste Flügel (22) und mit dem zugehörigen Verbindungsansatz (28) über ein Drehgelenk (34) verbunden ist, das ein Verbiegen in Längsrichtung in der Ebene der Schwenkbewegung erlaubt.

4. Blende nach Anspruch 3, dadurch gekennzeichnet, daß das Drehgelenk (34) durch einen Bereich verminderter Dicke des zweiten Flügels (24) gebildet ist.

5. Blende nach einem der Ansprüche 1 bis 4, dadurch gekennzeichnet, daß die Beaufschlagung der Abdeckplatte (14) durch das Ende (44) des zweiten Flügels (24) in der geschlossenen Verriegelungsstellung eine Federkraft zur Folge hat, die dazu neigt, die Verriegelungswirkung von Rasthaken (40) und Raststufe (38) zu verstärken, und daß das genannte Ende als Griffhebel ausgelegt ist, der dazu dient, den zweiten Flügel (24) in die geöffnete Entriegelungsstellung zu überführen.

6. Blende nach einem der Ansprüche 1 bis 5, dadurch gekennzeichnet, daß die beiden Verbindungsansätze (26, 28) des ersten und zweiten Flügels (22, 24) eine in Längsrichtung verlaufende Nut (42) begrenzen, deren Abstand zur ersten Auflageschulter (32) geringer ist als der Abstand zur Raststufe (38).

## Claims

1. A removable blanking plate designed to blank off a rectangular opening (12) arranged in a front plate (14) or front panel of an enclosure for housing modular case electrical switchgear, said blanking plate (10) comprising a body made of plastic material provided with fixing means having a first deformable branch (22) arranged as a positioning grip (30) designed to be engaged overlapping on the bottom edge of the opening (12), characterized in that the body is shaped as a profiled section achieved by extrusion, and comprises a rigid plate (16) equipped on its rear face (20) with a first and a second longitudinal rib (32, 36) for bearing of the plate (16) against the bottom and top edges of the opening (12), and a second branch (24) pivotally movable between a locked closed position and an unlocked open position, said second branch (24) being provided with a clipping latch (40) cooperating in the closed position with a retaining edge (38) securedly united to the rear face (20) of the plate (16).

2. The blanking plate according to claim 1, characterized in that the retaining edge (38) of the latch (40) is located between the second bearing rib (36) and the fixing base (28) of the second branch (24).

3. The blanking plate according to claim 1 or 2, characterized in that the thickness of the first and second branches (22, 24) is smaller than that of the rigid plate (16), and that the second branch (24) is longer than the first branch (22), and is joined to the corresponding base (28) by a hinge (34) allowing longitudinal folding in the direction of pivoting movement.

4. The blanking plate according to claim 3, characterized in that the hinge (34) is formed by a reduction of the thickness of the second branch (24).

5. The blanking plate according to one of the claims 1 to 4, characterized in that the reaction of the end (44) of the second branch (24) on the front plate (14) in the locked closed position generates a flexible force which tends to strengthen the locking action between the latch (40) and edge (38), and that said end is arranged as a gripping lever designed to move the second branch (24) to the unlocked open position.

6. The blanking plate according to one of the claims 1 to 5, characterized in that the two fixing bases (26, 28) of the first and second branches (22, 24) confine a longitudinal groove (42), which is closer to the first rib (32) that to the retaining edge (38).
